# NEUE EUROPÄISCHE PATENTSCHRIFT

(11) **EP 1 946 965 B2**
(45) Veröffentlichungstag und Bekanntmachung des Hinweises auf die Entscheidung über den Einspruch: **31.10.2018**
(45) Hinweis auf die Patenterteilung: 18.09.2013
(21) Anmeldenummer: 07450193.3
(22) Anmeldetag: 05.11.2007
(51) Int. Cl.: B60Q 1/00, G02B 6/00

(54) **Beleuchtungsvorrichtung zur Erzeugung von zumindest einer Lichtfunktion für eine Lichteinheit oder einen Scheinwerfer eines Kraftfahrzeuges**
Illumination device for creating at least one light function for a light unit or a headlamp of a motor vehicle
Dispositif d'éclairage destiné à la production d'au moins une fonction d'éclairage pour une unité d'éclairage ou un phare d'un véhicule automobile

(30) Priorität: 22.01.2007 AT 1072007
(43) Veröffentlichungstag der Anmeldung: 23.07.2008
(73) Patentinhaber: ZKW Group GmbH, 3250 Wieselburg (AT)
(72) Erfinder: Aigner, Michael, 3390 Melk (AT)
(74) Vertreter: Patentanwaltskanzlei Matschnig & Forsthuber OG

(56) Entgegenhaltungen:
- EP-A- 1 265 024
- EP-A- 1 726 479
- DE-A1- 19 652 159
- DE-A1- 19 838 224
- DE-A1-102005 029 363
- DE-A1-102005 038 830
- US-A- 5 400 225
- US-A1- 2006 227 568

## Beschreibung

Die Erfindung betrifft eine Beleuchtungsvorrichtung zur Erzeugung von zumindest einer Lichtfunktion für eine Lichteinheit oder einen Scheinwerfer eines Kraftfahrzeuges, wobei die Beleuchtungsvorrichtung zwei oder mehr Lichtleiter umfasst, und wobei jeder der Lichtleiter über eine eigene ihm zugeordnete Lichtquelle verfügt, mittels welcher Licht über einen Einkoppelbereich in den jeweiligen Lichtleiter eingespeist wird, und wobei weiters die Lichtleiter als längliche Lichtleitstäbe ausgebildet sind, welche jeweils zumindest einen Lichtauskoppelbereich an ihrer Mantelfläche besitzen.

Weiters betrifft die Erfindung eine Lichteinheit bzw. einen Scheinwerfer für Kraftfahrzeuge mit einer solchen Beleuchtungseinrichtung.

Zur Realisierung von Lichtfunktionen in Lichteinheiten bzw. Scheinwerfern für Kraftfahrzeuge werden auch längliche Lichtleiter bzw. Lichtleitstäbe verwendet, die auf geeignete Weise angeordnet und geformt sind.

Beispielsweise ist es bekannt, einen Lichtleitstab als Kreis auszubilden. Durch den Lichtaustritt über die Mantelfläche des Lichtleitstabes erscheint dieser dann als leuchtender Kreis, der beispielsweise zur Realisierung eines Standlichtes bzw. Positionslichtes oder auch eines Tagfahrlichts verwendet werden kann. Ein als Kreis ausgebildeter Lichtleitstab ist z.B. aus der DE 10 2005 029 363 A1 bekannt.

Weiters sind auch Lichtfunktionen mit mehreren Lichtleitstäben realisiert, wobei die Lichtleitstäbe neben oder übereinander parallel angeordnet sind. Auch sind hintereinander geschaltete, also in einer Reihe nahezu nahtlos aufgefädelte Lichtleiteranordnungen bekannt, siehe z.B. die DE 199 04 644 A1.

Grundsätzlich sind natürlich relativ beliebige solcher Gestaltungen möglich. Problematisch ist in diesem Zusammenhang allerdings, dass die Herstellung bestimmter Formen, z.B. auch eines Kreises, aufwändig und somit teuer ist und diese Lichtleiter auch für Beschädigungen anfällig sind. Ein weiteres Problem ist es auch, einen solchen Lichtleiter über seine ganze Länge möglicht gleichmäßig auszuleuchten, um ein gleichmäßiges Erscheinungsbild zu bieten.

Bei der Verwendung von zwei oder mehr Lichtleitern wie oben angesprochen können einige diese Probleme zumindest entschärft werden. Allerdings tritt bei den bekannten Lösungen das Problem auf, dass mit mehreren Lichtleitstäben kein einheitliches Erscheinungsbild in dem Sinne erzeugt werden kann, dass die einzelnen Lichtleitstäbe nicht als solche erkennbar sind. Dies ist bei den bekannten Beleuchtungsvorrichtungen nicht der Fall, bei diesen ist zumindest immer der Übergang zwischen zwei Lichtleitern für einen Betrachter erkennbar, was aber aus Designgründen unerwünscht ist. Es wird in diesem Zusammenhang auf US 5,400,225 A verwiesen.

Es ist eine Aufgabe der Erfindung, eine eingangs genannte Beleuchtungsvorrichtung dahingehend zu modifizieren, dass auf einfache Weise stabile Formen gebildet werden können, welche ein möglichst homogenes Erscheinungsbild nach Außen hin liefern.

Diese Aufgabe wird mit einer eingangs genannten Beleuchtungsvorrichtung mit den Merkmalen des Anspruchs 1 gelöst.

Diese Ebene ist typischerweise bei einem nach vorne Licht abstrahlenden Scheinwerfer bei in das Kraftfahrzeug eingebautem Zustand der Lichteinheit bzw. des Scheinwerfers im Wesentlichen eine Vertikalebene. Prinzipiell kann aber auch ein anderer Einbau des Scheinwerfers / der Lichteinheit erfolgen, etwa dass dieser leicht nach oben Licht abstrahlt, in diesem Fall ist die Ebene keine Vertikalebene.

Durch diese erfindungsgemäße Anordnung der Lichtleitstäbe sind für einen Betrachter von Außen die einzelnen Lichtleitstäbe nicht zu erkennen, vielmehr bilden diese für den Betrachter ein einheitliches und durchgehendes Erscheinungsbild wie von einem einzigen Lichtleitstab, wie z.B. von einem kreisförmigen Lichtleiter. Durch die Erfindung wird es möglich, auch kompliziertere Formen mit einem einheitlichen Erscheinungsbild zu gestalten, wobei gleichzeitig diese einfacher zu fertigen sind, stabiler sind und auch gleichmäßiger ausgeleuchtet sind, da jeder Lichtleitstab über eine eigene Lichtquelle verfügt.

Bei einer konkreten Ausführungsform der Erfindung weisen die Lichtleiter offene Enden auf, und die Lichtleiter sind derart angeordnet, dass die Projektionen der offenen Enden in die Ebene einander mit geringem oder keinem Abstand gegenüber liegen oder einander überlappen.

Die Ausgestaltung mit offenen Enden bietet sich an, da dadurch die Lichtleiter besonders einfach gestaltet werden können. Offene Enden sind wesentlich einfacher und mit einfacheren Werkzeugen zu erzeugen und sind auch weniger fehleranfällig in der Fertigung, z.B. besteht eine geringere Gefahr des Verziehens etc.

Durch die Anordnung der offenen Enden derart, dass zumindest die Projektionen der Enden einander gegenüber liegen (mit geringem oder keinem Abstand) oder einander überlappen, wird ein geschlossenes Erscheinungsbild erreicht.

Üblicherweise liegen auch die tatsächlichen Enden einander mit geringem Abstand gegenüber oder stoßen aneinander an, es kann aber auch sein, dass in horizontaler Richtung die Lichtleitstäbe hintereinander angeordnet sind, sodass sich auch ein überlappender optischer Effekt bei den Projektionen der offenen Enden ergeben kann.

Grundsätzlich ist vorgesehen, dass sich die Lichtleiter in jenen Bereichen überkreuzen oder ineinander übergehen, in denen nicht gewünscht ist, dass ein Übergang zu erkennen ist.

Bei einer konkreten Ausführungsform ist vorgesehen, dass sich die Projektionen der zumindest zwei Lichtleiter genau in einem, also lediglich genau in einem Bereich überkreuzen oder ineinander übergehen. Auf diese Weise erhält man eine klare und einfache Gestalt der Lichtleiteranordnung.

Grundsätzlich ist es aber denkbar, die Lichtleiter an mehreren, räumlich getrennten Stellen überlappen zu lassen (d.h. deren Projektionen), z.B. um besonders komplexe Formgebungen zu realisieren, etwa einen Schriftzug mit Lichtfunktion.

Erfindungsgemäß ist dabei vorgesehen, dass die Projektionen der zumindest zwei Lichtleiter einander in einem Nahbereich zu der Projektion der Einkoppelbereiche der Lichtleiter in die Ebene überkreuzen bzw. ineinander übergehen. In der Regel liegen ja die Lichtauskoppelbereiche der Lichtleiter im Wesentlichen in einer gemeinsamen Ebene (die nicht unbedingt mit der Ebene identisch sein muss), während die Lichteinkoppelbereiche etwas außerhalb der gemeinsamen Ebene liegen, sodass in diesem Bereich ein Überkreuzen der Lichtleiter einfacher möglich ist.

Eine besonders einfache Beleuchtungsvorrichtung nach der Erfindung umfasst genau zwei Lichtleiter.

Um auch bei mehreren Lichtleitern ein nach Außen hin einheitliches und durchgehendes Erscheinungsbild zu erreichen, ist weiters vorgesehen, dass bei drei oder mehr Lichtleitern sich die Normal-Projektion jedes Lichtleiters in die im Wesentlichen normal auf die Hauptlichtaustrittsrichtung stehende Ebene, welche Ebene bei in das Kraftfahrzeug eingebautem Zustand der Lichteinheit bzw. des Scheinwerfers in das Kraftfahrzeug im Wesentlichen eine Vertikalebene ist, mit zumindest einer Projektion eines der anderen Lichtleiter in einem Bereich überkreuzt oder in diesem Bereich in diese Projektion übergeht.

Weiters ist es vorteilhaft, wenn aus Designgründen eine zumindest teilweise lichtdurchlässige Blende vorgesehen ist, durch welche Licht aus der Beleuchtungsvorrichtung austritt. Ohne Blende würde eine Betrachter das Innere des Scheinwerfers/der Lichteinheit sehen, was natürlich unerwünscht ist, da dann Kabel, Stecker und dergleichen sichtbar wären.

Unter "teilweise lichtdurchlässig" ist dabei zu verstehen, dass zumindest bestimmte Bereiche und nicht die ganze Blende lichtdurchlässig sind.

Aus Designgründen kann auch gewünscht sein, dass die gesamte Blende aus Milchglas besteht. Allerdings ist dann im ausgeschalteten Zustand die Blende unter Umständen andersfärbig als der Rest im Scheinwerfer, was unschön wirken kann.

Deshalb wird in der Regel die Blende aus zwei unterschiedlichen Komponenten (transparent-milchig und lichtundurchlässig) gestaltet, wodurch sich zusätzliche Möglichkeiten der optischen Gestaltung ergeben.

Um ein besonders gut zerstreutes Licht und somit ein möglichst homogenes Lichtbild zu erhalten, ist weiters vorgesehen, dass die Blende aus Milchglas ist.

Im Folgenden ist die Erfindung an Hand der Zeichnung näher erläutert. In dieser zeigt
Fig. 1 eine perspektivische Ansicht einer erfindungsgemäßen Beleuchtungsvorrichtung von vorne,
Fig. 2 eine Darstellung der Projektion der Lichtleiter der Beleuchtungsvorrichtung in eine vertikale Ebene,
Fig. 3 das Beleuchtungssystem aus Figur 1 mit Blende, und
Fig. 4 die Darstellung aus Figur 3 von hinten.

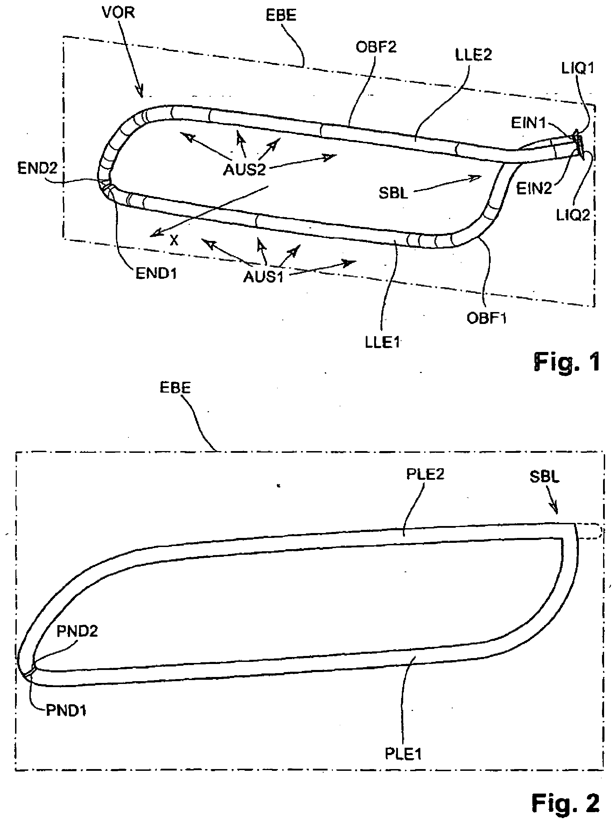

Figur 1 zeigt eine Beleuchtungsvorrichtung VOR zur Erzeugung einer Lichtfunktion für eine Lichteinheit oder einen Scheinwerfer eines Kraftfahrzeuges. Die Beleuchtungsvorrichtung VOR besteht in dieser Variante aus zwei Lichtleitern LLE1, LLE2, wobei jeder der Lichtleiter LLE1, LLE2 über eine eigene ihm zugeordnete Lichtquelle LIQ1, LIQ2 verfügt, mittels welcher Licht über einen Einkoppelbereich EIN1, EIN2 in den jeweiligen Lichtleiter LLE1, LLE2 eingespeist wird.

Bei den Lichtquellen LIQ1, LIQ2 handelt es sich dabei beispielsweise um je eine Leuchtdiode, es können aber auch andere Lichtquelle vorgesehen sein. Außerdem kann jede Lichtquelle auch aus mehreren Leuchtdioden oder mehreren Lampen etc. bestehen.

Die Lichtleiter LLE1, LLE2 sind als längliche Lichtleitstäbe ausgebildet sind, welche jeweils einen Lichtauskoppelbereich AUS1, AUS2 an ihrer Mantelfläche OBF1, OBF2 besitzen.

Erfindungsgemäß sind bei der Beleuchtungsvorrichtung VOR die beiden Lichtleitstäbe LLE1, LLE2 derart angeordnet, dass sich ihre Normal-Projektionen PLE1, PLE2 in eine im Wesentlichen normal auf die Hauptlichtaustrittsrichtung X stehende Ebene EBE, welche Ebene EBE bei in das Kraftfahrzeug eingebautem Zustand der Lichteinheit bzw. des Scheinwerfers im Wesentlichen eine Vertikalebene ist, sich in zumindest einem Bereich SBL überkreuzen bzw. ineinander über gehen, wie dies in Figur 2 gut zu erkennen ist.

Durch diese erfindungsgemäße Anordnung der Lichtleitstäbe LLE1, LLE2 sind für einen Betrachter von Außen die einzelnen Lichtleitstäbe nicht zu erkennen, vielmehr bilden diese für den Betrachter ein einheitliches und durchgehendes Erscheinungsbild wie von einem einzigen Lichtleitstab, wie z.B. von einem kreisförmigen Lichtleiter.

In der räumlichen Darstellung können Bereiche der Lichtleiter LLE1, LLE2 wie z.B. die Lichtauskoppelbereiche AUS1, AUS2 tatsächlich in einer gemeinsamen Ebene liegen, jene Bereiche, welche sich in der Projektion überkreuzen oder ineinander übergehen, sind hingegen in horizontaler Richtung hintereinander angeordnet.

Die beiden Lichtleiter LLE1, LLE2 weisen offene Enden END1, END2 auf, und die Lichtleiter LLE1, LLE2 sind derart angeordnet, dass die Projektionen PND1, PND2 der offenen Enden END1, END2 in die Ebene EBE einander mit geringem oder keinem Abstand gegenüber liegen oder einander überlappen.

Die Ausgestaltung mit offenen Enden END1, END2 bietet sich an, da dadurch die Lichtleiter LLE1, LLE2 besonders einfach gestaltet werden können. Offene Enden sind wesentlich einfacher und mit einfacheren Werkzeugen zu erzeugen und sind auch weniger fehleranfällig in der Fertigung, z.B. besteht eine geringere Gefahr des Verziehens etc.

Durch die Anordnung der offenen Enden derart, dass zumindest die Projektionen PND1, PND2 der Enden einander gegenüber liegen (mit geringem oder keinem Abstand) oder einander überlappen, wird ein geschlossenes Erscheinungsbild erreicht wie dies in Figur 2 zu erkennen ist.

Üblicherweise liegen auch die tatsächlichen Enden END1, END2 einander mit geringem Abstand gegenüber oder stoßen aneinander an, es kann aber auch sein, dass in horizontaler Richtung die Lichtleitstäbe hintereinander angeordnet sind, sodass sich auch ein überlappender optischer Effekt bei den Projektionen der offenen Enden ergeben kann.

Bei der gezeigten konkreten Ausführungsform überschneiden sich die Projektionen PLE1, PLE2 der zwei Lichtleiter LLE1, LLE2 genau in einem Bereich SBL.

Dabei überkreuzen sich die Projektionen PLE1, PLE2 der zwei Lichtleiter LLE1, LLE2 in einem Nahbereich zu der Projektion der Einkoppelbereiche EIN1, EIN2 der Lichtleiter LLE1, LLE2 in die Ebene EBE.

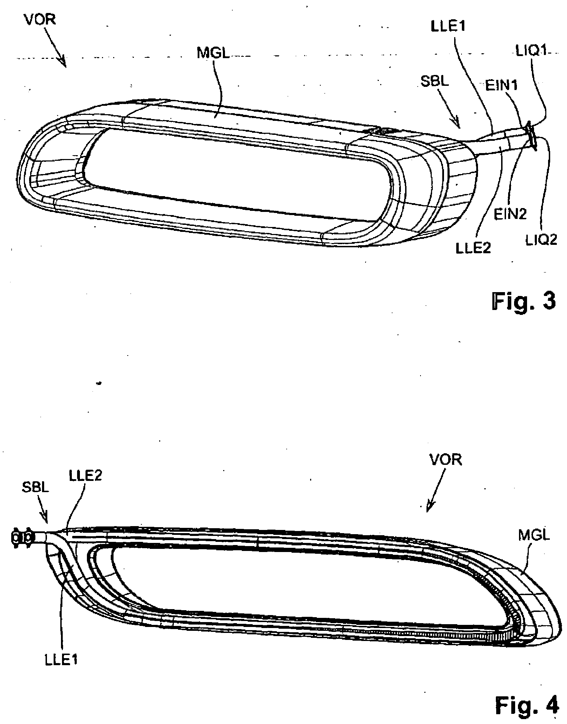

Weiters ist es vorteilhaft, wenn aus Designgründen eine zumindest teilweise lichtdurchlässige Blende MGL vorgesehen ist, durch welche Licht aus der Beleuchtungsvorrichtung VOR austritt, wie dies in Figur 3 und 4 gezeigt ist. Ohne Blende MGL würde eine Betrachter das Innere des Scheinwerfers/der Lichteinheit sehen, was natürlich unerwünscht ist, da dann Kabel, Stecker und dergleichen sichtbar wären.

Unter "teilweise lichtdurchlässig" ist dabei zu verstehen, dass zumindest bestimmte Bereiche und nicht die ganze Blende lichtdurchlässig sind.

Aus Designgründen kann auch gewünscht sein, dass die gesamte Blende aus Milchglas MGL besteht. Außerdem kann damit ein besonders gut zerstreutes Licht und somit ein möglichst homogenes Lichtbild erreicht werden.

Allerdings ist dann im ausgeschalteten Zustand die Blende unter Umständen andersfärbig als der Rest im Scheinwerfer, was unschön wirken kann.

Deshalb wird in der Regel die Blende aus zwei unterschiedlichen Komponenten (transparent-milchig und lichtundurchlässig) gestaltet, wodurch sich zusätzliche Möglichkeiten der optischen Gestaltung ergeben.

## Patentansprüche (Patentansprüche für folgende(n) Vertragsstaat(en): AT,BE,BG,CH,CY,CZ,DK,EE,ES,FI,FR,GB,GR,HU,IE,IS,IT,LI,LT,LU,LV,MC,MT,NL,PL,PT,RO,SE,SI,SK,TR)

1. Beleuchtungsvorrichtung zur Erzeugung von zumindest einer Lichtfunktion für eine Lichteinheit oder einen Scheinwerfer eines Kraftfahrzeuges, wobei die Beleuchtungsvorrichtung (VOR) zwei oder mehr Lichtleiter (LLE1, LLE2) umfasst, und wobei jeder der Lichtleiter (LLE1, LLE2) über eine eigene ihm zugeordnete Lichtquelle (LIQ1, LIQ2) verfügt, mittels welcher Licht über einen Einkoppelbereich (EIN1, EIN2) in den jeweiligen Lichtleiter (LLE1, LLE2) eingespeist wird, und wobei weiters die Lichtleiter (LLE1, LLE2) als längliche Lichtleitstäbe ausgebildet sind, welche jeweils zumindest einen Lichtauskoppelbereich (AUS1, AUS2) an ihrer Mantelfläche (OBF1, OBF2) besitzen,
**dadurch gekennzeichnet, dass**
zumindest zwei der Lichtleitstäbe (LLE1, LLE2) derart angeordnet sind, dass sich ihre Normal-Projektionen (PLE1, PLE2) in eine im Wesentlichen normal auf die Hauptlichtaustrittsrichtung (X) stehende Ebene (EBE) in zumindest einem Bereich (SBL) überkreuzen bzw. ineinander über gehen,
sodass sich ein geschlossenes und durchgehendes Erscheinungsbild der Lichtleiter wie von einem einzigen Lichtleitstab, wie z.B. von einem kreisförmigen Lichtleiter, ergibt, und wobei
die Projektionen (PLE1, PLE2) der zumindest zwei Lichtleiter (LLE1, LLE2) einander in einem Nahbereich zu der Projektion der Einkoppelbereiche (EIN1, EIN2) der Lichtleiter (LLE1, LLE2) in die Ebene (EBE) überkreuzen bzw. ineinander übergehen.

2. Beleuchtungsvorrichtung nach Anspruch 1, **dadurch gekennzeichnet, dass** die Lichtleiter (LLE1, LLE2) offene Ende (END1, END2) aufweisen, und die Lichtleiter (LLE1, LLE2) derart angeordnet sind, dass die Projektionen (PND1, PND2) der offenen Enden (END1, END2) in die Ebene (EBE) einander mit geringem oder keinem Abstand gegenüber liegen oder einander überlappen.

3. Beleuchtungsvorrichtung nach Anspruch 1 oder 2, **dadurch gekennzeichnet, dass** sich die Projektionen (PLE1, PLE2) der zumindest zwei Lichtleiter (LLE1, LLE2) genau in einem Bereich (SBL) überkreuzen oder ineinander übergehen.

4. Beleuchtungsvorrichtung nach einem der Ansprüche 1 bis 3, **gekennzeichnet durch** genau zwei Lichtleiter (LLE1, LLE2).

5. Beleuchtungsvorrichtung nach einem der Ansprüche 1 bis 3, **dadurch gekennzeichnet, dass** bei drei oder mehr Lichtleitern sich die Normal-Projektion jedes Lichtleiters in die im Wesentlichen normal auf die Hauptlichtaustrittsrichtung stehende Ebene, welche Ebene bei in das Kraftfahrzeug eingebautem Zustand der Lichteinheit bzw. des Scheinwerfers im Wesentlichen eine Vertikalebene ist, mit zumindest einer Projektion eines der anderen Lichtleiter in einem Bereich überkreuzt oder in diesem Bereich in diese Projektion übergeht.

6. Beleuchtungsvorrichtung nach einem der Ansprüche 1 bis 5, **dadurch gekennzeichnet, dass** eine zumindest teilweise lichtdurchlässige Blende (MGL) in Lichtaustrittsrichtung nach den Lichtleitern (LLE1, LLE2) angeordnet ist.

7. Beleuchtungsvorrichtung nach Anspruch 6, **dadurch gekennzeichnet dass** die Blende aus Milchglas (MGL) ist.

8. Lichteinheit bzw. Scheinwerfer für ein Kraftfahrzeug mit einer Beleuchtungsvorrichtung (VOR) nach einem der Ansprüche 1 bis 7.

## Patentansprüche (Patentansprüche für folgende(n) Vertragsstaat(en): DE)

1. Beleuchtungsvorrichtung zur Erzeugung von zumindest einer Lichtfunktion für eine Lichteinheit oder einen Scheinwerfer eines Kraftfahrzeuges, wobei die Beleuchtungsvorrichtung (VOR) zwei oder mehr Lichtleiter (LLE1, LLE2) umfasst, und wobei jeder der Lichtleiter (LLE1, LLE2) über eine eigene ihm zugeordnete Lichtquelle (LIQ1, LIQ2) verfügt, mittels welcher Licht über einen Einkoppelbereich (EIN1, EIN2) in den jeweiligen Lichtleiter (LLE1, LLE2) eingespeist wird, und wobei weiters die Lichtleiter (LLE1, LLE2) als längliche Lichtleitstäbe ausgebildet sind, welche jeweils zumindest einen Lichtauskoppelbereich (AUS1, AUS2) an ihrer Mantelfläche (OBF1, OBF2) besitzen, wobei
zumindest zwei der Lichtleitstäbe (LLE1, LLE2) derart angeordnet sind, dass sich ihre Normal-Projektionen (PLE1, PLE2) in eine im Wesentlichen normal auf die Hauptlichtaustrittsrichtung (X) stehende Ebene (EBE) in zumindest einem Bereich (SBL) überkreuzen bzw. ineinander über gehen,
sodass sich ein geschlossenes und durchgehendes Erscheinungsbild der Lichtleiter wie von einem einzigen Lichtleitstab, wie z.B. von einem kreisförmigen Lichtleiter, ergibt,
**dadurch gekennzeichnet, dass**
eine zumindest teilweise lichtdurchlässige Blende (MGL) in Lichtaustrittsrichtung nach den Lichtleitern (LLE1, LLE2) angeordnet ist, und
die Projektionen (PLE1, PLE2) der zumindest zwei Lichtleiter (LLE1, LLE2) einander in einem Nahbereich zu der Projektion der Einkoppelbereiche (EIN1, EIN2) der Lichtleiter (LLE1, LLE2) in die Ebene (EBE) überkreuzen bzw. ineinander übergehen.

2. Beleuchtungsvorrichtung nach Anspruch 1, **dadurch gekennzeichnet, dass** die Lichtleiter (LLE1, LLE2) offene Ende (END1, END2) aufweisen, und die Lichtleiter (LLE1, LLE2) derart angeordnet sind, dass die Projektionen (PND1, PND2) der offenen Enden (END1, END2) in die Ebene (EBE) einander mit geringem oder keinem Abstand gegenüber liegen oder einander überlappen.

3. Beleuchtungsvorrichtung nach Anspruch 1 oder 2, **dadurch gekennzeichnet, dass** sich die Projektionen (PLE1, PLE2) der zumindest zwei Lichtleiter (LLE1, LLE2) genau in einem Bereich (SBL) überkreuzen oder ineinander übergehen.

4. Beleuchtungsvorrichtung nach einem der Ansprüche 1 bis 3, **gekennzeichnet durch** genau zwei Lichtleiter (LLE1, LLE2).

5. Beleuchtungsvorrichtung nach einem der Ansprüche 1 bis 3, **dadurch gekennzeichnet, dass** bei drei oder mehr Lichtleitern sich die Normal-Projektion jedes Lichtleiters in die im Wesentlichen normal auf die Hauptlichtaustrittsrichtung stehende Ebene, welche Ebene bei in das Kraftfahrzeug eingebautem Zustand der Lichteinheit bzw. des Scheinwerfers im Wesentlichen eine Vertikalebene ist, mit zumindest einer Projektion eines der anderen Lichtleiter in einem Bereich überkreuzt oder in diesem Bereich in diese Projektion übergeht.

6. Beleuchtungsvorrichtung nach einem der Ansprüche 1 bis 5, **dadurch gekennzeichnet dass** die Blende aus Milchglas (MGL) ist.

7. Lichteinheit bzw. Scheinwerfer für ein Kraftfahrzeug mit einer Beleuchtungsvorrichtung (VOR) nach einem der Ansprüche 1 bis 6.

## Claims (Claims for the following Contracting State(s): DE)

1. A lighting device for generating at least one lighting function for a light unit or a headlight of a motor vehicle, wherein the lighting device (VOR) comprises two or more optical waveguides (LLE1, LLE2), and wherein each of the optical waveguides (LLE1, LLE2) has its own light source (LIQ1, LIQ2) assigned thereto, by means of which light is fed via a coupling region (EIN1, EIN2) into the respective optical waveguide (LLE1, LLE2), and wherein the optical waveguides (LLE1, LLE2) are further formed as elongate light-conducting rods, which each have at least one light decoupling region (AUS1, AUS2) on their lateral surface (OBF1, OBF2), wherein
at least two of the light-conducting rods (LLE1, LLE2) are arranged in such a way that their normal projections (PLE1, PLE2) in a plane (EBE) arranged substantially normal to the main light outlet direction (X) intersect or transition into one another in at least one region (SBL),
such that a uniform and continuous appearance of the optical waveguides as from a single light-conducting rod, such as from a circular optical waveguide, is produced,
**characterised in that**
an at least partially translucent diaphragm (MGL) is arranged in the light outlet direction after the optical waveguides (LLE1, LLE2), and the projections (PLE1, PLE2) of the at least two optical waveguides (LLE1, LLE2) intersect one another or transition into one another in a region close to the projection of the coupling regions (EIN1, EIN2) of the optical waveguides (LLE1, LLE2) in the plane (EBE).

2. The lighting device according to Claim 1, **characterised in that** the optical waveguides (LLE1, LLE2) have open ends (END1, END2) and the optical waveguides (LLE1, LLE2) are arranged in such a way that the projections (PND1, PND2) of the open ends (END1, END2) in the plane (EBE) are mutually opposed with little or no spacing or overlap one another.

3. The lighting device according to Claim 1 or 2, **characterised in that** the projections (PLE1, PLE2) of the at least two optical waveguides (LLE1, LLE2) intersect or transition into one another exactly in one region (SBL).

4. The lighting device according to one of Claims 1 to 3, **characterised by** exactly two optical waveguides (LLE1, LLE2).

5. The lighting device according to one of Claims 1 to 3, **characterised in that**, with three of more optical waveguides, the normal projection of each optical waveguide in the plane arranged substantially normal to the main light outlet direction, said plane, when the light unit or the headlight is installed in the motor vehicle, being substantially a vertical plane, intersects in a region with at least one projection of one of the other optical waveguides or transitions into this projection in this region.

6. The lighting device according to one of claims 1 to 5, **characterised in that** the diaphragm is made of milk glass (MGL).

7. A lighting unit or headlight for a motor vehicle, comprising a lighting device (VOR) according to one of Claims 1 to 6.

## Claims (Claims for the following Contracting State(s): AT,BE,BG,CH,CY,CZ,DK,EE,ES,FI,FR,GB,GR,HU,IE,IS,IT,LI,LT,LU,LV,MC,MT,NL,PL,PT,RO,SE,SI,SK,TR)

1. A lighting device for generating at least one lighting function for a light unit or a headlight of a motor vehicle, wherein the lighting device (VOR) comprises two or more optical waveguides (LLE1, LLE2), and wherein each of the optical waveguides (LLE1, LLE2) has its own light source (LIQ1, LIQ2) assigned thereto, by means of which light is fed via a coupling region (EIN1, EIN2) into the respective optical waveguide (LLE1, LLE2), and wherein the optical waveguides (LLE1, LLE2) are further formed as elongate light-conducting rods, which each have at least one light decoupling region (AUS1, AUS2) on their lateral surface (OBF1, OBF2),
**characterised in that**
at least two of the light-conducting rods (LLE1, LLE2) are arranged in such a way that their normal projections (PLE1, PLE2) in a plane (EBE) arranged substantially normal to the main light outlet direction (X) intersect or transition into one another in at least one region (SBL),
such that a uniform and continuous appearance of the optical waveguides as from a single light-conducting rod, such as from a circular optical waveguide, is produced, and wherein the projections (PLE1, PLE2) of the at least two optical waveguides (LLE1, LLE2) intersect one another or transition into one another in a region close to the projection of the coupling regions (EIN1, EIN2) of the optical waveguides (LLE1, LLE2) in the plane (EBE).

2. The lighting device according to Claim 1, **characterised in that** the optical waveguides (LLE1, LLE2) have open ends (END1, END2) and the optical waveguides (LLE1, LLE2) are arranged in such a way that the projections (PND1, PND2) of the open ends (END1, END2) in the plane (EBE) are mutually opposed with little or no spacing or overlap one another.

3. The lighting device according to Claim 1 or 2, **characterised in that** the projections (PLE1, PLE2) of the at least two optical waveguides (LLE1, LLE2) intersect or transition into one another exactly in one region (SBL).

4. The lighting device according to one of Claims 1 to 3, **characterised by** exactly two optical waveguides (LLE1, LLE2).

5. The lighting device according to one of Claims 1 to 3, **characterised in that**, with three of more optical waveguides, the normal projection of each optical waveguide in the plane arranged substantially normal to the main light outlet direction, said plane, when the light unit or the headlight is installed in the motor vehicle, being substantially a vertical plane, intersects in a region with at least one projection of one of the other optical waveguides or transitions into this projection in this region.

6. The lighting device according to one of Claims 1 to 5, **characterised in that** an at least partially translucent diaphragm (MGL) is arranged in the light outlet direction after the optical waveguides (LLE1, LLE2).

7. The lighting device according to claim 6, **characterised in that** the diaphragm is made of milk glass (MGL).

8. A lighting unit or headlight for a motor vehicle, comprising a lighting device (VOR) according to one of Claims 1 to 7.

## Revendications (Revendications pour l'(les) Etat(s) contractant(s) suivant(s): DE)

1. Dispositif d'éclairage servant à produire au moins une fonction d'éclairage pour une unité d'éclairage ou un phare d'un véhicule automobile, sachant que le dispositif d'éclairage (VOR) comprend deux guides de lumière par fibres optiques (LLE1, LLE2) ou plus et sachant que chacun des guides de lumière par fibres optiques (LLE1, LLE2) dispose d'une source lumineuse propre (LIQ1, LIQ2) qui lui est associée, laquelle permet d'injecter de la lumière par l'intermédiaire d'une zone d'entrée (EIN1, EIN2) dans le guide de lumière par fibres optiques (LLE1, LLE2) respectif, et sachant en outre que les guides de lumière par fibres optiques (LLE1, LLE2) se présentent sous la forme de baguettes optiques, lesquelles sont dotées respectivement au niveau de leur surface extérieure (OBF1, OBF2) au moins d'une zone de sortie de lumière (AUS1, AUS2), et sachant
qu'au moins deux des baguettes optiques (LLE1, LLE2) sont disposées de telle manière que leurs projections normales (PLE1, PLE2) se croisent ou se chevauchent dans au moins une zone (SBL), dans un plan (EBE) se trouvant sensiblement perpendiculaire à la direction de sortie de la lumière principale (X),
de sorte qu'il ressort une apparence fermée et continue des guides de lumière par fibres optiques comme d'une seule baguette optique, par exemple d'un guide de lumière par fibres optiques circulaire, **caractérisé en ce qu'**un diaphragme (MGL) au moins en partie transparent est disposé dans la direction de sortie de la lumière après les guides de lumière par fibres optiques (LLE1, LLE2), et les projections (PLE1, PLE2) desdits au moins deux guides de lumière par fibres optiques (LLE1, LLE2) se croisent ou se chevauchent les unes les autres dans le plan (EBE), dans une zone proche pour former la projection des zones d'entrée (EIN1, EIN2) des guides de lumières par fibres optiques (LLE1, LLE2).

2. Dispositif d'éclairage selon la revendication 1, **caractérisé en ce que** les guides de lumière par fibres optiques (LLE1, LLE2) présentent des extrémités ouvertes (END1, END2), et **en ce que** les guides de lumière par fibres optiques (LLE1, LLE2) sont disposés de telle manière que les projections (PND1, PND2) des extrémités ouvertes (END1, END2) se font face les unes les autres dans un plan (EBE) avec un faible espacement ou sans aucun espacement ou se chevauchent les unes les autres.

3. Dispositif d'éclairage selon la revendication 1 ou 2, **caractérisé en ce que** les projections (PLE1, PLE2) desdits au moins deux guides de lumière par fibres optiques (LLE1, LLE2) se croisent ou se chevauchent les unes les autres précisément en une zone (SBL).

4. Dispositif d'éclairage selon l'une quelconque des revendications 1 à 3, **caractérisé par** précisément deux guides de lumière par fibres optiques (LLE1, LLE2).

5. Dispositif d'éclairage selon l'une quelconque des revendications 1 à 3, **caractérisé en ce qu'**en présence de trois guides de lumière par fibres optiques ou plus, la projection normale de chaque guide de lumière par fibres optiques se croise, dans le plan essentiellement perpendiculaire à la direction de sortie de la lumière principale, lequel plan est essentiellement un plan vertical lorsque l'unité d'éclairage ou le phare est installé(e) dans le véhicule automobile, avec au moins une projection d'un des autres guides de lumière par fibres optiques dans une zone ou se fond dans ladite projection dans ladite zone.

6. Dispositif d'éclairage selon l'une quelconque des revendications 1 à 5, **caractérisé en ce que** le diaphragme est constitué de verre opale (MGL).

7. Unité d'éclairage ou phare pour un véhicule automobile comprenant un dispositif d'éclairage (VOR) selon l'une quelconque des revendications 1 à 6.

## Revendications (Revendications pour l'(les) Etat(s) contractant(s) suivant(s): AT,BE,BG,CH,CY,CZ,DK,EE,ES,FI,FR,GB,GR,HU,IE,IS,IT,LI,LT,LU,LV,MC,MT,NL,PL,PT,RO,SE,SI,SK,TR)

1. Dispositif d'éclairage servant à produire au moins une fonction d'éclairage pour une unité d'éclairage ou un phare d'un véhicule automobile, sachant que le dispositif d'éclairage (VOR) comprend deux guides de lumière par fibres optiques (LLE1, LLE2) ou plus et sachant que chacun des guides de lumière par fibres optiques (LLE1, LLE2) dispose d'une source lumineuse propre (LIQ1, LIQ2) qui lui est associée, laquelle permet d'injecter de la lumière par l'intermédiaire d'une zone d'entrée (EIN1, EIN2) dans le guide de lumière par fibres optiques (LLE1, LLE2) respectif, et sachant en outre que les guides de lumière par fibres optiques (LLE1, LLE2) se présentent sous la forme de baguettes optiques, lesquelles sont dotées respectivement au niveau de leur surface extérieure (OBF1, OBF2) au moins d'une zone de sortie de lumière (AUS1, AUS2),
**caractérisé en ce**
**qu'**au moins deux des baguettes optiques (LLE1, LLE2) sont disposées de telle manière que leurs projections normales (PLE1, PLE2) se croisent ou se chevauchent dans au moins une zone (SBL), dans un plan (EBE) se trouvant sensiblement perpendiculaire à la direction de sortie de la lumière principale (X),
de sorte qu'il ressort une apparence fermée et continue des guides de lumière par fibres optiques comme d'une seule baguette optique, par exemple d'un guide de lumière par fibres optiques circulaire, et **en ce que** les projections (PLE1, PLE2) desdits au moins deux guides de lumière par fibres optiques (LLE1, LLE2) se croisent ou se chevauchent les unes les autres dans le plan (EBE), dans une zone proche pour former la projection des zones d'entrée (EIN1, EIN2) des guides de lumières par fibres optiques (LLE1, LLE2).

2. Dispositif d'éclairage selon la revendication 1, **caractérisé en ce que** les guides de lumière par fibres optiques (LLE1, LLE2) présentent des extrémités ouvertes (END1, END2), et **en ce que** les guides de lumière par fibres optiques (LLE1, LLE2) sont disposés de telle manière que les projections (PND1, PND2) des extrémités ouvertes (END1, END2) se font face les unes les autres dans un plan (EBE) avec un faible espacement ou sans aucun espacement ou se chevauchent les unes les autres.

3. Dispositif d'éclairage selon la revendication 1 ou 2, **caractérisé en ce que** les projections (PLE1, PLE2) desdits au moins deux guides de lumière par fibres optiques (LLE1, LLE2) se croisent ou se chevauchent les unes les autres précisément en une zone (SBL).

4. Dispositif d'éclairage selon l'une quelconque des revendications 1 à 3, **caractérisé par** précisément deux guides de lumière par fibres optiques (LLE1, LLE2).

5. Dispositif d'éclairage selon l'une quelconque des revendications 1 à 3, **caractérisé en ce qu'**en présence de trois guides de lumière par fibres optiques ou plus, la projection normale de chaque guide de lumière par fibres optiques se croise, dans le plan essentiellement perpendiculaire à la direction de sortie de la lumière principale, lequel plan est essentiellement un plan vertical lorsque l'unité d'éclairage ou le phare est installé(e) dans le véhicule automobile, avec au moins une projection d'un des autres guides de lumière par fibres optiques dans une zone ou se fond dans ladite projection dans ladite zone.

6. Dispositif d'éclairage selon l'une quelconque des revendications 1 à 5, **caractérisé en ce qu'**un diaphragme (MGL) au moins en partie transparent est disposé dans la direction de sortie de la lumière après les guides de lumière par fibres optiques (LLE1, LLE2).

7. Dispositif d'éclairage selon la revendication 6, **caractérisé en ce que** le diaphragme est constitué de verre opale (MGL).

8. Unité d'éclairage ou phare pour un véhicule automobile comprenant un dispositif d'éclairage (VOR) selon l'une quelconque des revendications 1 à 7.
